# EUROPEAN PATENT SPECIFICATION

(11) **EP 2 106 976 B1**
(45) Date of publication and mention of the grant of the patent: **02.03.2011**
(21) Application number: 08103241.9
(22) Date of filing: 31.03.2008
(51) Int. Cl.: B60R 21/34

(54) **Hood hinge**
Haubenscharnier
Charnière de capot

(43) Date of publication of application: 07.10.2009
(73) Proprietor: Ford Global Technologies, LLC, Dearborn, MI 48126 (US)
(72) Inventor: Berggren, Tomas, 412 59, GÖTEBORG (SE); Lindmark, Peter, 422 43, HISINGS BACKA (SE); Olsson, Lennart, 443 34, LERUM (SE)
(74) Representative: Norberg, Charlotte

(56) References cited:
- WO-A-00/72101
- WO-A-2005/113301
- DE-A1-102004 011 334
- DE-A1-102006 015 413
- GB-A- 2 379 481
- JP-A- 11 291 948

## Description

### TECHNICAL FIELD

The present invention relates to a hood hinge arrangement for a passenger car adapted to pivotally connect the rear end of the hood with the body of the passenger car, wherein the hood hinge arrangement comprises a pair of hood hinges to be mounted at opposite sides of the hood rear end, each hood hinge comprising a hood hinge element to be fixed to the hood, a body hinge element to be fixed to the body of the passenger car and being in pivotal connection with the hood hinge element at a pivot, wherein the body hinge element is collapsible in case of collision with a pedestrian applying an impact to the hood in the vicinity of the hood hinge.

### BACKGROUND ART

To improve pedestrian safety, it is known to design the hood of a passenger car so it provides a cushioning effect if a pedestrian impacts the hood in case of a collision. In such a case, the impact applied to the hood is to great extent absorbed by the hood, thus being deformed, instead of by the pedestrian. Accordingly, injuries to the pedestrian can hopefully be reduced. A requirement is however that there is enough space from the hood to underlying components, e.g. the contents of the engine house, so that an enough deformation length exists.

However it can be difficult to predict the exact location of the hood where the impact will occur. In case the impact occurs close to, or directly at, the hinges of the hood, i.e. where the hood is fixed to the body of the passenger car, it is difficult for the hood to deform and therefore the hood is less cushioning in those areas. To this end, it is also known to design the hinges of the hood in such a way so that they collapse in case of an impact.

WO 00/72101 A1 discloses a collapsible hood hinge for rear end attachment to the hood comprising a bracket extending at an angle upwards and rearwards to a pivot point for the hood. The end of the bracket is supported by a collapsible, substantially vertical leg. If the hood is subjected to an impact by an object with sufficient force, the leg will collapse and the bracket will fold downward to allow the hood to provide for a cushioning effect. However, since the bracket is subjected to great tensile forces in case of collision (forces in the longitudinal direction of the passenger car) great demands are put on the strength of the joint between the bracket and the body beam.

US 5 263 546 discloses a collapsible front hood hinge' assembly for front end attachment to the hood, comprising a bracket 13 extending substantially vertically from a pivot point 14 towards the hood. The hood is further supported by a collapsible leg 16, 17, 18 extending upwardly and forwardly from the pivot point towards the hood. If the hood is subjected to an impact by an object with sufficient force, the legs 16, 17 will move relative another causing the front part of the hood to move rearwardly and downwardly, while the rear part of the hood will move rearwardly and upwardly. However, the assembly is complicated and requires several parts and attachment points to function, both at the front and the rear end of the hood. This results in a heavyweight hood hinge assembly and a time consuming mounting.

Yet another document disclosing a hood hinge arrangement for a passenger car is JP-A-11 291 948.

### OBJECT OF THE INVENTION

In view of the disclosed related art, an object of the present invention is thus to provide a collapsible hood hinge which has a more simple design.

Yet an object of the present invention is to provide a collapsible hood hinge which is simple to manufacture.

A further object of the invention is to provide a collapsible hood hinge which enables quick mounting.

Another object of the present invention is to provide a collapsible hood hinge which reliably can absorb forces in the longitudinal direction of the passenger car.

### SUMMARY OF THE INVENTION

These and other objects of the present invention will be achieved by the features of the characterising portion of claim 1.

According to the invention the hood hinge arrangement is **characterised in that** the body hinge element is made from one single piece of material, comprising a first portion to be fixed to the body of the passenger car, a second portion to be collapsible in a substantially vertical direction, and a third portion to be supported by the a-pillar of the passenger car for absorbing compressive forces, whereby the second portion, in case of said impact, will collapse and allow the hood and the hood hinge element to be downwardly displaced so as to reduce the force of the impact, and the third portion will deflect in conjunction with the collapsing movement of the second portion as well as restrain the hood from moving in the direction of the windscreen of the passenger car.

Since the body hinge element is made from one single piece of material a simple design is achieved, and which design easily can be altered depending on specific conditions of loading. Moreover, because the body hinge element thus is of a unitary construction having the built-in features of collapsibility, no further elements are required to provide for the collapsibility functionality. The unitary construction also facilitates mounting of the body hinge element to the body of the passenger car, since only one element needs to be mounted. It also makes manufacturing of the body hinge element simpler, since it is made from one single piece of material. The compressive force absorbing ability of the third portion in combination with the support with the a-pillar of the passenger car also makes it effective to absorb the forces in the longitudinal direction of the passenger car. Thereby the hood is prevented from being displaced through the windscreen of the passenger car.

Suitably, the second portion has a curved shaped to provide a cushioning effect when the impact is applied. Hereby is achieved a simple way to provide for the collapsibility of the body hinge element. Moreover a great freedom of choice is also achieved to adapt the appearance of the second portion depending on the stresses it will be subjected to during an impact in case of a collision with a pedestrian.

Preferably, the curved shaped second portion is substantially V-shaped and the apex of the V is pointing in the forward direction of the passenger car. Hereby an effective shape of the second portion is realized.

Advantageously, the angle of the apex is variable. Hereby the collapsing ability of the second portion becomes variable.

Suitably, the V-shaped second portion comprises a first and a second leg, the first leg connecting to the third portion, and the second leg connecting to the first portion, and preferably, the first and/or the second leg is provided with weakening sections where crack growth can begin. Hereby the collapsing movement of the body hinge element can be further controlled by allowing permanent collapsing due to crack formation, whereby a complement to the resilient characteristics of the curved shaped second portion is realized.

Advantageously, the intersection between the first and the second leg is provided with a recess. Hereby a suitable starting point for crack growth is achieved.

Suitably, the pivot is arranged in the transition area between the second and the third portion. Hereby the impact forces will be distributed to the second and third portions of the body hinge element, respectively.

Advantageously, the first portion is elongated in the forward direction of the passenger car. Hereby mounting of auxiliary devices to the first portion is made possible, whereby extra mounting elements become superfluous.

Suitably, the body hinge element is made from a plastic or composite material. Hereby a lightweight and cheap material is achieved which is easy to form depending on range of application.

### BRIEF DESCRIPTION OF THE DRAWINGS

The present invention will now be described with reference to the accompanying drawings, on which:
Fig. 1 is a schematic side view of a hood of a passenger car incorporating the hood hinge arrangement according to the present invention;
Fig. 2a shows a side view of a first embodiment of the hinge arrangement in fig. 1;
Fig. 2b shows the hinge arrangement in fig. 2a when an impact is applied to the hood of the passenger car.
Fig. 3a shows a side view of a second embodiment of the hinge arrangement in fig. 1.
Fig. 3b shows the hinge arrangement in fig. 3a when an impact is applied to the hood of the passenger car.

### DETAILED DESCRIPTION

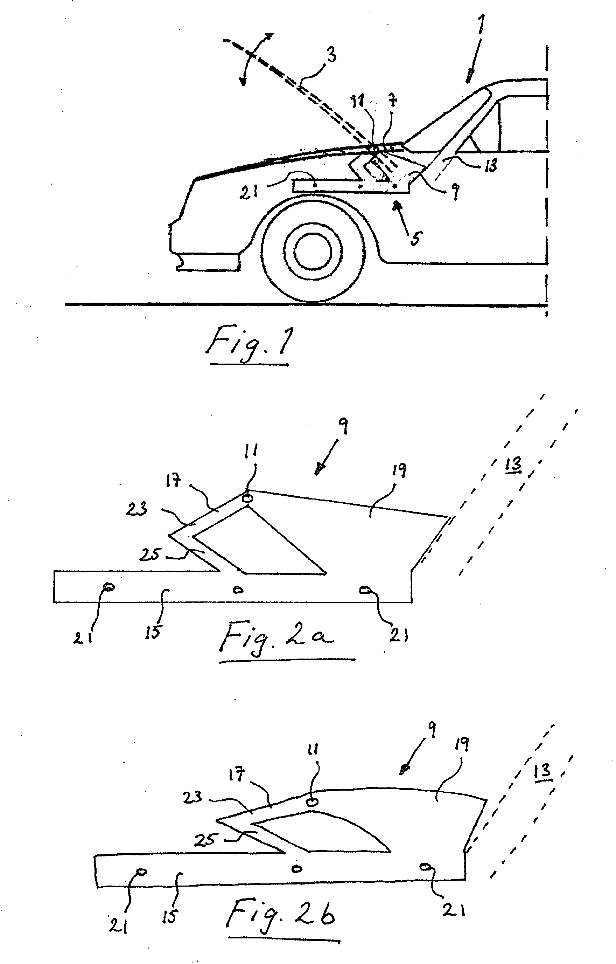

Fig. 1 shows a side view of the front part of a passenger car 1. The car comprises a hood 3 which is hinged to the car body at the rear end of the hood by means of a hood hinge arrangement 5 according to the present invention. The hood hinge arrangement comprises a pair of hood hinges 5, each being arranged at opposite rear ends of the hood 3 and being effective to open and close the hood.

The hood hinges 5 (where only the left hood hinge is shown in fig. 1) comprises a hood hinge element 7 which is fixed to the hood at the underside thereof, and a body hinge element 9 which is fixed to the body of the passenger car. The elements 7, 9 are connected to each other by a pivot 11 in the shape of a bushing or similar conventional pivot element. From fig. 1 it is also evident that the body hinge element is supported against the a-pillar 13 of the passenger car.

The hood 3 and the body hinge element 9 are constructed so that they are vertically deformed, i.e. collapsed while receiving a predetermined vertical load. The predetermined vertical load is chosen so it becomes less than a value at which serious head injuries may arise on persons in case a pedestrian applies an impact to the hood in the vicinity of the hood hinge.

Fig. 2a-b show the body hinge element 9 of the hood hinge 3 in a non-collapsed and collapsed state, respectively. The body hinge element 9 is made from a single piece of material, i.e. it is manufactured from a single blank, moulded or formed by any other suitable means to form a unitary design. The body hinge element 9 is preferably manufactured from a plastic or composite material or other suitable lightweight, easy machinable and cheap material. The hood hinge element 7, i.e. the part which is fixed to the underside of the hood 3 can be manufactured from any suitable conventional material, e.g. aluminum.

The body hinge element 9 can be dived into three portions; a first 15, a second 17 and a third 19 portion. The first portion 15 is elongated with a rectangular section and substantially horizontally orientated when the body hinge element 9 is fixed to the body of the passenger car 1. To this end fixing means 21, such as bolts or rivets attach the first portion to a body beam of the passenger car. The second portion 17 has a curved shape in the form of a V with two legs 23, 25, the apex of which points in the forward direction of the passenger car 1. The third portion 19 is rod shaped and is inclined forwardly and upwardly and connects by means of a lower end to a rear part of the first portion 15, and by an upper end to the upper leg 23 of the second portion 17. The lower end of the third portion 19 tapers in the direction of the upper end, so that the lower end becomes wider and therefore more rigid, while the upper end of the third portion 19 is thinner and thus becomes more flexible. The lower leg 25 of the second portion 17 connects to the first portion 15 at a location ahead of the connection between the third portion 19 and the first portion 15. The pivot 11 of the body hinge element 9 is located at the transition area between the second portion 17 and the third portion 19. The third portion 19 abuts by means of a rear section against the a-pillar 13 of the passenger car 1 as mentioned above and which will be of great importance in case of collisions.

The first portion 15 is elongated and extends horizontally in the forward direction of the passenger car 1 and beyond the apex of the V-shaped second portion 17. This part, i.e. the part being ahead of the apex may serve as means of attachment, e.g. for head lamp fixations.

In fig. 2b the body hinge element 9 is shown when an impact has been applied to the hood 3 in case of a collision with a pedestrian hitting the hood, directly at, or in the vicinity of any of the hood hinges 5. During such an impact, the third portion 19 of the body hinge element 9 will effectively absorb horizontal forces, since it is inclined forwardly and thus absorbs the compressive forces which are transmitted to the a-pillar 13 of the passenger car. Thereby, the hood 3 will not come loose from its hinges and be displaced through the windscreen of the passenger car 1. At the same time the second portion 17 will absorb the vertical forces and due to the V-shape collapse or flex downwards providing a cushioning effect. At a certain load the cushioning effect will be permanent due to plastic deformation of the second portion 17. Thus, the hood 3 and the first hinge 7 element will collapse vertically downwards and thereby absorb a significant part of the impact. The third portion 19 will during the downward movement follow the movement of the second portion (indicated in the figure in that the third portion is somewhat curved forwardly and downwardly).

It is conceivable to vary the appearance of the third portion 19 so as to provide for different downward collapsing, e.g. make the connection to the first portion 15, i.e. the lower end of the third portion 19 more or less wide or by varying the thickness of the upper end of the third portion. It is also conceivable to provide the apex with different angles to make the V-shaped second portion 17 more or less collapsible. It is also thinkable to adopt another curved shape of the second portion 17 other than V-shape, e.g. a U-shape. It is moreover possible to arrange two V-shaped second portions 17 side by side, as seen in the transverse direction of the hood 3.

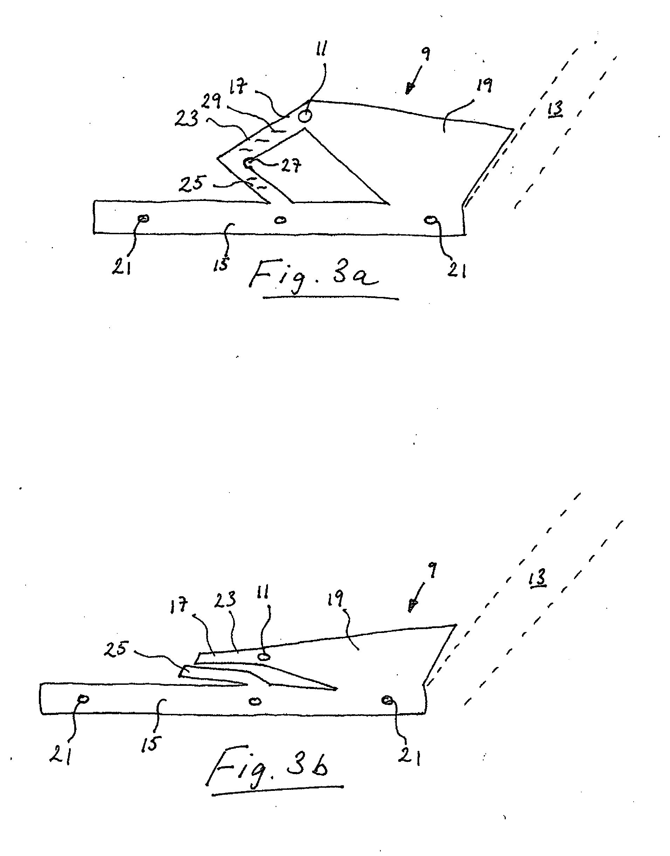

From fig. 3a-b the V-shaped second portion 17 has been provided with a recess 27 in the intersection between the upper 23 and lower 25 legs. In case of an impact, a crack growth will form in this area and cause plastic deformation of the second portion 17. Thus, when a crack grows the second portion 17 will collapse under the vertical force of the impact and cause a permanent collapsing of the second portion 17.

Instead of providing a recess 27 at the intersection it is also conceivable to arrange weakening sections 29 in either or in both of the legs 23, 25 where the crack growth can begin. The advantage with such weakening sections 29 is that the control of the collapsing movement can be improved, e.g. if the crack formation is allowed to start at a first weakening section 29 and then continues at a second weakening section after the collapsing corresponding to the crack formation of the first weakening section has occurred.

## Claims

1. Hood hinge arrangement (5) for a passenger car adapted to pivotally connect the rear end of the hood (3) with the body of the passenger car, wherein the hood hinge arrangement (5) comprises a pair of hood hinges (5) to be mounted at opposite sides of the hood rear end, each hood hinge comprising:
- a hood hinge element (7) to be fixed to the hood (3),
- a body hinge element (9) to be fixed to the body of the passenger car and being in pivotal connection with the hood hinge element at a pivot (11),
wherein the body hinge element (9) is collapsible in case of collision with a pedestrian applying an impact to the hood (3) in the vicinity of the hood hinge (5),
said body hinge element (9) being made from one single piece of material, comprising:
- a first portion (15) to be fixed to the body of the passenger car,
- a second portion (17) to be collapsible in a substantially vertical direction, and **characterised in that** it further comprises
- a third portion (19) which abuts by means of a rear section against the a-pillar (13) of the passenger car for absorbing compressive forces,
whereby the second portion (17), in case of said impact, will collapse and allow the hood (3) and the hood hinge element (7) to be downwardly displaced so as to reduce the force of the impact, and the third portion (19) will deflect in conjunction with the collapsing movement of the second portion (17) as well as restrain the hood (3) from moving in the direction of the windscreen of the passenger car.

2. Hood hinge arrangement according to claim 1, wherein the second portion (17) has a curved shaped to provide a cushioning effect when the impact is applied.

3. Hood hinge arrangement according to claim 2, wherein the curved shaped second portion (17) is substantially V-shaped and the apex of the V is pointing in the forward direction of the passenger car.

4. Hood hinge arrangement according to claim 3, wherein the angle of the apex is variable.

5. Hood hinge arrangement according to claim 3 or 4, wherein the V-shaped second portion (17) comprises a first (23) and a second (25) leg, the first leg (23) connecting to the third portion (19), and the second leg (25) connecting to the first portion (15).

6. Hood hinge arrangement according to claim 5, wherein the first (23) and/or the second (25) leg is provided with weakening sections (29) where crack growth can begin.

7. Hood hinge arrangement according to claim 5 or 6, wherein the intersection between the first (23) and the second leg (25) is provided with a recess (27).

8. Hood hinge arrangement according to any of the previous claims, wherein the pivot (11) is arranged in the transition area between the second (17) and the third portion (19).

9. Hood hinge arrangement according to any of the previous claims, wherein the first portion (15) is elongated in the forward direction of the passenger car.

10. Hood hinge arrangement according to any of the previous claims, wherein the body hinge element (9) is made from plastic or composite.

## Patentansprüche

1. Haubengelenkanordnung (5) für einen Personenkraftwagen, ausgelegt, um das hintere Ende der Haube (3) mit dem Körper des Personenkraftwagens schwenkbar zu verbinden, wobei die Haubengelenkanordnung (5) ein Paar Haubengelenke (5) umfasst, zur Montage auf gegenüberliegenden Seiten des hinteren Haubenendes, jedes Haubengelenk umfassend:
- ein Haubengelenkelement (7), anzubringen an der Motorhaube (3),
- ein Körpergelenkelement (9), anzubringen an dem Körper des Personenkraftwagens und in schwenkbarer Verbindung mit dem Haubengelenkelement an einem Drehpunkt (11),
wobei das Körpergelenkelement (9) im Fall einer Kollision mit einem Fußgänger, 1 aufbringend einen Aufprall auf die Motorhaube (3) in der Nähe des Haubengelenks (5), zusammenschiebbar ist,
wobei das Körpergelenkelement (9) aus einem einzigen Stück Material hergestellt ist, umfassend:
- einen ersten Abschnitt (15) anzubringen an dem Körper des Personenkraftwagens,
- einen zweiten Abschnitt (17) zusammenschiebbar in einer im Wesentlichen vertikalen Richtung, und **dadurch gekennzeichnet, dass** sie weiterhin umfasst
- einen dritten Abschnitt (19), der über Mittel eines hinteren Abschnitts an der A-Säule (13) des Personenkraftwagens angrenzt, zur Absorption von Kompressionskräften,
wobei der zweite Abschnitt (17), im Fall des Aufpralls, sich zusammenschieben wird und eine Verschiebung der Motorhaube (3) und des Haubengelenkelements (7) nach unten zulässt, um so die Kraft des Aufpralls zu reduzieren, und der dritte Abschnitt (19) abgelenkt wird, zusammen mit der zusammenschiebenden Bewegung des zweiten Abschnitts (17) ebenso wie die Motorhaube (3) von einer Bewegung in Richtung der Windschutzscheibe des Personenkraftwagens zurückgehalten wird.

2. Haubengelenkanordnung gemäß Anspruch 1, wobei der zweite Abschnitt (17) eine gekrümmte Form aufweist, um einen dämpfenden Effekt bereitzustellen, wenn der Aufprall aufgebracht wird.

3. Haubengelenkanordnung gemäß Anspruch 2, wobei der gekrümmt geformte zweite Abschnitt (17) im Wesentlichen V-förmig ist und der Scheitelpunkt des V in die Vorwärtsrichtung des Personenkraftwagens zeigt.

4. Haubengelenkanordnung gemäß Anspruch 3, wobei der Winkel des Scheitelpunkts variabel ist.

5. Haubengelenkanordnung gemäß Anspruch 3 oder 4, wobei der V-förmige zweite Abschnitt (17) einen ersten (23) und einen zweiten (25) Schenkel umfasst, der erste Schenkel (23) verbunden mit dem dritten Abschnitt (19), und der zweite Schenkel (25) verbunden mit dem ersten Abschnitt (15).

6. Haubengelenkanordnung gemäß Anspruch 5, wobei der erste (23) und/oder der zweite (25) Schenkel mit geschwächten Sektionen (29) versehen ist, wo Risswachstum beginnen kann.

7. Haubengelenkanordnung gemäß Anspruch 5 oder 6, wobei der Kreuzungspunkt zwischen dem ersten (23) und dem zweiten Schenkel (25) mit einer Aussparung (27) versehen ist.

8. Haubengelenkanordnung gemäß einem der vorstehenden Ansprüche, wobei der Drehpunkt (11) in dem Übergangsbereich zwischen dem zweiten (17) und dem dritten Abschnitt (19) angeordnet ist.

9. Haubengelenkanordnung gemäß einem der vorstehenden Ansprüche, wobei der erste Abschnitt (15) in der Vorwärtsrichtung des Personenkraftwagens gestreckt ist.

10. Haubengelenkanordnung gemäß einem der vorstehenden Ansprüche, wobei das Körpergelenkelement (9) aus Plastik oder Verbundwerkstoff hergestellt ist.

## Revendications

1. Agencement de charnière de capot (5) pour une voiture particulière, adapté pour raccorder de manière pivotante l'extrémité arrière du capot (3) avec le corps de la voiture particulière, dans lequel l'agencement de charnière de capot (5) comprend une paire de charnières de capot (5) destinées à être montées sur les côtés opposés de l'extrémité arrière du capot, chaque charnière de capot comprenant :
- un élément de charnière de capot (7) destiné à être fixé sur le capot (3),
- un élément de charnière de corps (9) destiné à être fixé sur le corps de la voiture particulière et étant en raccordement pivotant avec l'élément de charnière de capot au niveau d'un pivot (11),
dans lequel l'élément de charnière de corps (9) est repliable en cas de collision avec un piéton qui applique un impact sur le capot (3) à proximité de la charnière de capot (5),
ledit élément de charnière de corps (9) étant réalisé à partir d'une seule pièce de matériau, comprenant :
- une première partie (15) destinée à être fixée sur le corps de la voiture particulière,
- une deuxième partie (17) destinée à être repliable dans une direction sensiblement verticale, et **caractérisé en ce qu'**il comprend en outre :
- une troisième partie (19) qui vient en butée, au moyen d'une section arrière contre le pilier A (13) de la voiture particulière pour absorber les forces de compression,
moyennant quoi la deuxième partie (17), en cas dudit impact, se replie et permet au capot (3) et à l'élément de charnière de capot (7) d'être déplacés vers le bas afin de réduire la force de l'impact, et la troisième partie (19) dévie conjointement au mouvement de repli de la deuxième partie (17) et empêche également le capot (3) de se déplacer dans la direction du pare-brise de la voiture particulière.

2. Agencement de charnière de capot selon la revendication 1, dans lequel la deuxième partie (17) a une forme incurvée afin de fournir un effet amortissant lorsque l'impact est appliqué.

3. Agencement de charnière de capot selon la revendication 2, dans lequel la deuxième partie (17) de forme incurvée est sensiblement en forme de V et le sommet du V est orienté dans la direction avant de la voiture particulière.

4. Agencement de charnière de capot selon la revendication 3, dans lequel l'angle du sommet est variable.

5. Agencement de charnière de capot selon la revendication 3 ou 4, dans lequel la deuxième partie en forme de V (17) comprend une première (23) et une deuxième (25) patte, la première patte (23) se raccordant à la troisième partie (19) et la deuxième patte (25) se raccordant à la première partie (15).

6. Agencement de charnière de capot selon la revendication 5, dans lequel la première (23) et/ou la deuxième (25) patte est prévue avec des sections d'affaiblissement (29) où le développement de fissure peut commencer.

7. Agencement de charnière de capot selon la revendication 5 ou 6, dans lequel l'intersection entre la première (23) et la deuxième patte (25) est prévue avec un évidement (27).

8. Agencement de charnière de capot selon l'une quelconque des revendications précédentes, dans lequel le pivot (11) est agencé dans la zone de transition entre la deuxième (17) et la troisième partie (19).

9. Agencement de charnière de capot selon l'une quelconque des revendications précédentes, dans lequel la première partie (15) est allongée dans la direction vers l'avant de la voiture particulière.

10. Agencement de charnière de capot selon l'une quelconque des revendications précédentes, dans lequel l'élément de charnière de corps (9) est réalisé à partir d'une matière plastique ou d'un composite.
